# EUROPEAN PATENT SPECIFICATION

(11) **EP 2 721 678 B1**
(45) Date of publication and mention of the grant of the patent: **08.03.2017**
(21) Application number: 12730611.6
(22) Date of filing: 19.06.2012
(51) Int. Cl.: H01M 8/18, H01M 8/20

(54) **CATHOLYTE REGENERATION**
KATHOLYTREGENERATION
RÉGÉNÉRATION DE CATHOLYTE

(30) Priority: 20.06.2011 GB 201110357
(43) Date of publication of application: 23.04.2014
(73) Proprietor: Acal Energy Limited, Runcorn Cheshire WA7 4QX (GB)
(72) Inventor: CLARKSON, Brian, Runcorn Cheshire WA7 4QX (GB); LONGMAN, Robert J., Runcorn Cheshire WA7 4QX (GB)
(74) Representative: Potter, Julian Mark
(86) International application number: PCT/GB2012/051410
(87) International publication number: WO 2012/175950

(56) References cited:
- WO-A1-2009/093080
- FR-A- 1 312 782
- JP-A- 1 307 174

## Description

The present invention relates generally to the regeneration of a catholyte solution in a redox fuel cell, and more particularly, to the regeneration of a catholyte solution in a redox fuel cell by way of atomisation. There is thus provided a method of regenerating a catholyte solution in a redox fuel cell, a regeneration zone in a redox fuel cell, a redox fuel cell comprising such a regeneration zone, and use of the regeneration zone.

The subject of regeneration technology is well known within the field of fuel cells and it is a well understood technique to use the generation of small diameter air bubbles in a catholyte flow to achieve this purpose. Indeed, this technique works well with catholyte solution bubble formation in which the air:liquid ratio is in the region of 4:1 (wherein the oxidant is air for example). However, problems are encountered when the air:liquid ratio increases because it then becomes difficult to maintain a foam. In order to generate and maintain foams, such as pylyoxometallate foams, at a much higher air:liquid ratio, it would be necessary to incorporate surface tension modifiers. This is undesirable because it adds to the complexity of the system and also unnecessarily increases the cost. Additionally, surface tension modifiers can interact with the membrane material in the fuel cell stack and cause loss of performance. Additionally, at an air:liquid ratio of about 7:1, the foam ceases to behave as a fluid (as, for instance, one can observe with foam on washing up liquid or shaving foam) which is highly undesirable.

WO 2009/093080 A1 describes a redox fuel cell comprising a catholyte solution. The catholyte solution comprises a redox mediator which is at least partially regenerated by reaction with an oxidant. In one described example oxygen is bubbled through a solution containing the mediator.

From the discussion that is to follow, it will become apparent how the present invention as defined in the claims addresses the aforementioned deficiencies and provides numerous additional advantages not hitherto contemplated or possible with prior art techniques and instructions.

A desirable air:liquid ratio for second generation catalysts in automotive applications is about 20:1 to 30:1. As discussed, it is difficult, if not impossible, to maintain a foam at this air:liquid ratio using prior art techniques.

According to a first aspect of the present invention, there is encompassed a method of regenerating a catholyte solution in a redox fuel cell, comprising the steps of:
- providing a redox fuel cell comprising a catholyte solution;
- providing droplet formation means for catholyte solution atomisation;
- atomising, by way of the droplet formation means or other means, the catholyte solution, thereby generating a mist of catholyte solution droplets;
- feeding the mist of catholyte solution droplets into an oxidant stream, wherein an average ratio of the oxidant to the liquid catholyte solution droplets is from 10:1 to 50:1; and
- providing separation means for separating the mist of catholyte solution droplets from the oxidant stream.

The method addresses the problems mentioned above in that atomisation of the catholyte solution enables the production of catholyte solution droplets having the requisite surface area and being able to sustain it for a period long enough to achieve the appropriate mass transfer of oxidant (for instance, oxygen) from the catholyte. This is made possible by the formation of a mist of fine droplets. Foam formation at air:liquid ratios of about 30:1 is possible due to the atomisation of the catholyte solution which causes the individual droplets to be spaced by a significantly smaller amount than droplets having a larger size and not formed by atomisation, for instance. A small droplet size may be advantageous because it may minimise the diffusion distance for oxygen within the droplet and thus reduces the required time of flight to achieve the required mass transfer. In at least some embodiments, the spacing between droplets may not be critical as oxygen diffusion in air is fast and, therefore, not limiting.

It may be that the method comprises the step of providing multiple droplet formation means for catholyte solution atomisation. Provision of multiple droplet formation means may have the effect of enhancing the efficiency of the atomisation process. It may be advantageous to inject in multiple points in order to achieve a more uniform distribution of droplets within the reaction chamber.

The droplet formation means may be constituted by injection means.

The droplet formation means may include spray nozzles, spinning discs, acoustically driven oscillators, and micro-fluidic driven oscillators. Of course, it will be appreciated that other forms of injection means also provide the equivalent desired effect.

It may be that the oxidant stream flow directs the fine droplets. The oxidant stream flow may deter the fine droplets from impacting the reaction vessel of the redox fuel cell so that time of flight of the droplets is sufficient to accomplish required mass transfer.

Smaller droplets often require a shorter time of flight and may, therefore, be more easily directed by the oxidant stream flow. The average oxidant:liquid ratio of the fine droplets may be from 10:1 to 50:1, more particularly 20:1 to 30:1. The average oxidant:liquid ratio of the fine droplets may be 30:1, Below a ratio of 10:1 the spacing may become unacceptably low. Above a ratio of 50:1 the air flow rate and blower consumption may become undesirably high.

The spacing between the fine droplets may be about 1.5 times the average diameter of the fine droplets. Spacing in this region enables foam formation at the requisite oxidant:liquid ratio. The driving parameter, for instance, may be the amount of oxidant necessary to regenerate the catholyte. As an example, an efficient system may be considered one in which the air:liquid ratio is as described and at least 50% of the oxidant (oxygen) is consumed. As a higher proportion of the oxygen is consumed, the rate of mass transfer may slow down. The spacing, therefore, may be a simple geometric calculation based on spheres at a given air:liquid ratio.

The average droplet diameter size may range from **1** to 100 µm. More particularly, the average droplet diameter size may range from 1 to 5 µm. Where the droplet size is larger, for instance, the mass transfer may be slower due to the time for diffusion in the liquid phase. Larger droplets may be feasible in a large scale system using conventional spray tower technology.

The oxidant may comprise air. The oxidant may comprise oxygen. By use of oxygen, for example, mass transfer rates may be higher thus reducing the time of flight and reactor volume. Of course, the oxidant may comprise a combination of air and additional oxygen to allow, for instance, membrane enrichment of oxygen in air.

The separation means may comprise a cyclone separator. More particularly, the separation means may comprise a spiral cyclone separator. On achieving a sufficient time of flight, coalescence of the droplets may be accomplished by use of a cyclone or other suitable means.

The catholyte solution may comprise a catalyst, such as a polyoxometallate (POM).

In another aspect of the present invention, there is provided a regeneration zone for a redox fuel cell, comprising:
- droplet formation means for catholyte solution atomisation operable to generate a mist of catholyte solution droplets;
- means for supplying an oxidant stream to the cathode region of the cell;
- means for feeding the mist of catholyte solution droplets into the oxidant stream, wherein the means for supplying an oxidant stream and means for feeding the mist of catholyte solution droplets are configured to provide an average ratio of the oxidant to the liquid catholyte solution droplets of from 10:1 to 50:1; and
- separation means for separating the mist of catholyte solution droplets from the oxidant stream.

According to a further aspect of the present invention, there is envisaged a redox fuel cell comprising:
an anode and a cathode separated by an ion selective polymer electrolyte membrane;
   means for supplying a fuel to the anode region of the cell;
   means for supplying an oxidant to the cathode region of the cell;
   means for providing an electrical circuit between respective anodes and cathodes of the cell;
   a catholyte solution comprising at least one catholyte component; and
   a regeneration zone as described above, optionally wherein the catholyte solution comprises a redox mediator couple.

According to another aspect, the present invention provides use of the regeneration zone as specified herein in a redox fuel cell for regeneration of a catholyte solution.

The present invention will now be described more particularly, by way of example, with reference to the accompanying drawings, in which:
- Figure 1: is a diagram of two droplets in which the air:liquid ratio of the catholyte solution is 4:1 demonstrating the impractibility of separate sustaining droplets at low air:liquid ratios;
- Figure 2: is a diagram of two droplets of a catholyte solution in which the air:liquid ratio is 30:1, formed in accordance with the present invention;
- Figure 3: is an atomising system formed according to an embodiment of the present invention; and
- Figure 4: is a block diagram of a redox fuel cell formed according to an embodiment of the present invention.

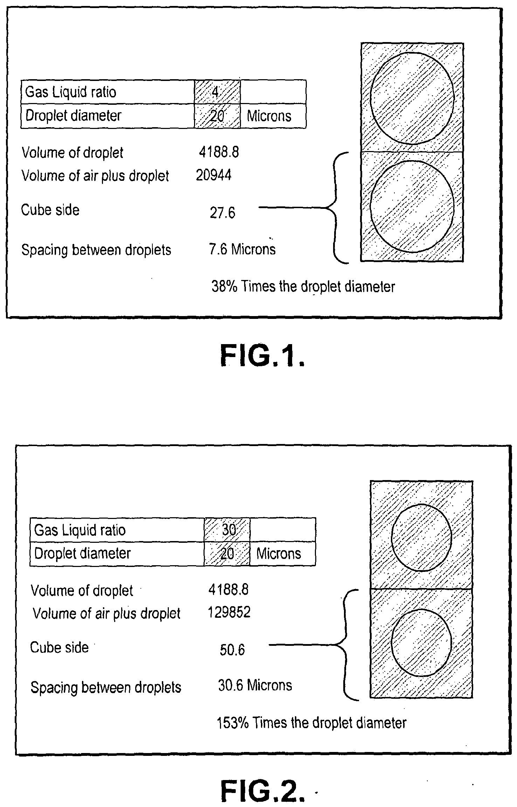

Referring first to Figure 1, there is shown two identical droplets placed next to one another which form part of a catholyte solution having a air:liquid ratio of 4:1. As can be seen from Figure 1, the spacing between the identical droplets is unrealistically small so that it becomes very difficult to accomplish the required surface area and to sustain it for long enough to achieve requisite mass transfer of oxygen from the catholyte. The spacing between the droplets being a mere 7.6 microns, which equates to 0.38 times the droplet diameter.

By contrast, it can be seen from Figure 2, two identical droplets forming part of a catholyte solution having a gas:liquid ratio of 30:1. The spacing between the droplets is significantly greater being 30.6 microns, which equates to approximately 1.5 times the droplet diameter. At this droplet spacing, it becomes possible to maintain a mist even when using air:liquid ratios at 30:1. Here, it becomes possible to achieve the necessary surface area and to sustain it for long enough to achieve the appropriate mass transfer of oxygen from the catholyte by way of forming the mist of fine droplets.

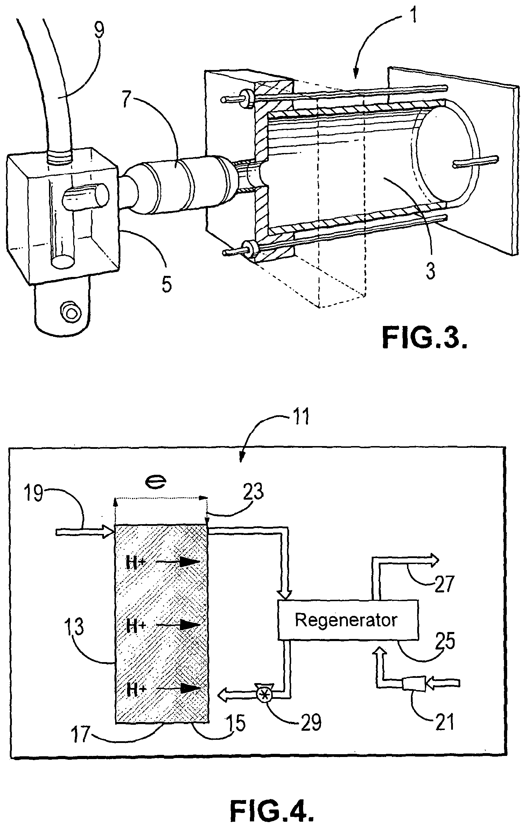

Referring now to Figure 3, there is shown an atomiser system, generally indicated 1. The atomiser system 1 comprises a large cylindrical test chamber 3 which is connected to a sealed sample port 5 by a smaller cylindrical conduit 7. The sealed sample port, in this embodiment, takes the form of a cube-like prism.

In accordance with the present invention, it was seen to increase the air:liquid ratios in the catholyte solution by dividing the liquid into fine droplets in an air (oxidant) stream flow, rather than generating finely divided bubbles, as performed in conventional techniques,

In use, air was drawn through the atomiser system 1 by way of a vacuum pump 9, shown connected at the top of the cube-like sealed sample port 5. A small sample of fully reduced polyoxometallate was sprayed into the test chamber 3 (on the right hand side), and the mist of fine droplets were then separated and collected in the sealed sample port 5. The droplets pass via the conduit 7. The redox potential of the separated mist is then measured.

The mean droplet size obtainable from such an atomiser is 60 microns with water. The pressure generated by the hand pump is of the order of 8 bar. At this pressure, the energy required to pump 18 litres per minute of polyoxometallate would be of the order or 200W of hydraulic power and with a pump efficiency of 70%, 280W of electrical energy would be required. Since there would be minimal energy required to circulate the air (unlike mixers/ejectors), for instance) it does not have to be pressurised and the parasitic power is not out of the question.

Having conducted the test, a sufficient amount of polyoxometallate was collected in order to obtain a redox measurement. The corresponding redox potentials and the redox dates are as follows:

| **POM condition** | **Redox potential - Mvolts** | **Percentage age Vanadium reduction** |
|---|---|---|
| Before atomisation | 304 | 88 |
| As collected from cyclone | 365 | 77 |
| **Change in vanadium reduction** | | **11%** |

The change in vanadium reduction is equal to the change measured in a single path through the fuel cell stack. It is envisaged that the time of flight of the droplets still in the system would be approximately less than one second. Reducing the air flow velocity would increase the time of flight and consequent regeneration.

The cyclone separator worked particularly well with very high air: droplet ratios.

Referring now to Figure 4, there is shown a block diagram of a redox fuel cell formed in accordance with an embodiment of the present invention. The redox fuel cell is generally indicated 11. The redox fuel cell 11 is constituted by anode 13 and a cathode 15 separated by an ion selective polymer electrolyte membrane 17. The redox fuel cell 11 also comprises means 19 for supplying a fuel, in this embodiment hydrogen, to the anode 13 region of the cell 11. Further, the redox fuel cell 11 also comprises means 21 for supplying an oxidant (air) to the cathode 15 region of the cell 11. The means 21 for supplying an oxidant are constituted by a blower. Furthermore, the redox fuel cell 11 also comprises means 23 for providing an electrical circuit between respective anode 13 and cathode 15 of the cell 11. This is shown by the arrows indicated 23 with the electron symbol thereabove.

In use, hydrogen is catalysed on the anode 13 in a conventional fashion. However, unlike conventional technology, the electron and proton are absorbed into a catholyte solution containing redox catalyst systems, which flow continuously from the stack to an external regenerator, generally indicated 25. In the regenerator 25, the cathode comes into contact with air. The electron, proton and oxygen from air reacts to form water, which exits the regenerator 25 as vapour along the arrow indicated 27. The regenerated catholyte then flows back into the cell 11 by means of pump 29.

In this embodiment, the regenerator 25 (regeneration zone) comprises droplet formation means for catholyte solution atomisation operable to generate and mists of fine droplets; means 21 for supplying an oxidant stream to the cathode 15 region of the cell 11; means for feeding the mists of fine droplets in to the oxidant stream; means for regulating the oxidant stream flow so that time of flight of the droplet is sufficient to accomplish required mass transfer; and separation means for separating the list of fine droplets from the oxidant stream.

In this way, a catholyte solution having an air:liquid ratio of 30:1 can be achieved whilst the mixture can advantageously continue to behave as a well-mixed fluid.

## Claims

1. A method of regenerating a catholyte solution in a redox fuel cell, comprising the steps of:
- providing a redox fuel cell comprising a catholyte solution;
- providing droplet formation means for catholyte solution atomisation;
- atomising, by way of the droplet formation means or other means, the catholyte solution, thereby generating a mist of catholyte solution droplets;
- feeding the mist of catholyte solution droplets into an oxidant stream, wherein an average ratio of the oxidant to the liquid catholyte solution droplets is from 10:1 to 50:1; and
- providing separation means for separating the mist of catholyte solution droplets from the oxidant stream.

2. The method according to Claim 1, comprising the step of providing multiple droplet formation means for catholyte solution atomisation.

3. The method according to any one of Claims 1 or 2, wherein the oxidant comprises air and/or wherein the oxidant comprises oxygen.

4. The method according to any one of Claims 1 to 3, wherein the catholyte solution comprises a catalyst, such as a polyoxometallate (POM).

5. A regeneration zone for a redox fuel cell, comprising:
- droplet formation means for catholyte solution atomisation operable to generate a mist of catholyte solution droplets;
- means for supplying an oxidant stream to the cathode region of the cell;
- means for feeding the mist of catholyte solution droplets into the oxidant stream, wherein the means for supplying an oxidant stream and means for feeding the mist of catholyte solution droplets are configured to provide an average ratio of the oxidant to the liquid catholyte solution droplets of from 10: 1 to 50:1; and
- separation means for separating the mist of catholyte solution droplets from the oxidant stream.

6. The regeneration zone according to Claim 5, comprising multiple droplet formation means for catholyte solution atomisation.

7. The regeneration zone according to any one of Claims 5 or 6, operable to supply an oxidant which comprises air and/or operable to supply an oxidant which comprises oxygen.

8. The regeneration zone according to any one of Claims 5 to 7, adapted for a catholyte solution which comprises a catalyst, such as a polyoxometallate (POM).

9. The method according to any one of Claims 1 to 4 or the regeneration zone according to any one of Claims 5 to 8, wherein the droplet formation means include spray nozzles, spinning disks, acoustically driven oscillators, and micro-fluidic driven oscillators.

10. The method according to any one of Claims 1 to 4 or 9, or the regeneration zone according to any one of Claims 5 to 9, wherein the oxidant stream flow directs the catholyte solution droplets and/or wherein the oxidant stream flow deters the catholyte solution droplets from impacting the reaction vessel of the redox fuel cell so that time of flight of the droplets is sufficient to accomplish required mass transfer.

11. The method according to any one of Claims 1 to 4, 9 or 10, or the regeneration zone according to any one of Claims 5 to 10, wherein the average ratio of the oxidant to the liquid catholyte solution droplets is 20:1 to 30:1 and/or wherein the spacing between the catholyte solution droplets is about 1.5 times the average diameter of the catholyte solution droplets.

12. The method according to any one of Claims 1 to 4 or 9 to 11, or the regeneration zone according to any one of Claims 5 to 11, wherein the average droplet diameter size ranges from 1 to 100mn, optionally wherein the average droplet diameter size ranges from 1 to 5mm.

13. The method according to any one of Claims 1 to 4 or 9 to 12, or the regeneration zone according to any one of Claims 5 to 12, wherein the separation means comprise a cyclone separator, and/or wherein the separation means comprise a spiral cyclone separator.

14. A redox fuel cell comprising:
an anode and a cathode separated by an ion selective polymer electrolyte membrane;
means for supplying a fuel to the anode region of the cell;
means for supplying an oxidant to the cathode region of the cell;
means for providing an electrical circuit between respective anodes and cathodes of the cell;
a catholyte solution comprising at least one catholyte component; and
a regeneration zone according to claim 5, optionally wherein the catholyte solution comprises a redox mediator couple.

15. Use of the regeneration zone of any one of Claims 5 to 13 in a redox fuel cell for regeneration of a catholyte solution.

## Patentansprüche

1. Verfahren zum Regenerieren einer Katholytlösung in einer Redox-Brennstoffzelle, umfassend folgende Schritte:
- Bereitstellen einer eine Katholytlösung umfassenden Redox-Brennstoffzelle;
- Bereitstellen von Tröpfchenbildungsmitteln für die Katholytlösungszerstäubung;
- Zerstäuben, mittels der Tröpfchenbildungsmittel oder anderer Mittel, der Katholytlösung, wodurch ein Nebel aus Katholytlösungströpfchen erzeugt wird;
- Zuführen des Nebels aus Katholytlösungströpfchen in einen Oxidationsmittelstrom, wobei ein durchschnittliches Verhältnis des Oxidationsmittels zu den flüssigen Katholytlösungströpfchen von 10:1 bis 50:1 beträgt; und
- Bereitstellen von Abscheidungsmitteln zum Abscheiden des Nebels aus Katholytlösungströpfchen aus dem Oxidationsmittelstrom.

2. Verfahren nach Anspruch 1, umfassend den Schritt des Bereitstellens mehrerer Tröpfchenbildungsmittel für die Katholytlösungszerstäubung.

3. Verfahren nach einem der Ansprüche 1 oder 2, wobei das Oxidationsmittel Luft umfasst und/oder wobei das Oxidationsmittel Sauerstoff umfasst.

4. Verfahren nach einem der Ansprüche 1 bis 3, wobei die Katholytlösung einen Katalysator, wie etwa ein Polyoxometallat (POM), umfasst.

5. Regenerierungszone für eine Redox-Brennstoffzelle, die Folgendes umfasst:
- Tröpfchenbildungsmittel für die Katholytlösungszerstäubung, die wirksam sind, um einen Nebel aus Katholytlösungströpfchen zu erzeugen;
- Mittel zum Zuführen eines Oxidationsmittelstroms zu der Kathodenregion der Zelle;
- Mittel zum Zuführen des Nebels aus Katholytlösungströpfchen in den Oxidationsmittelstrom, wobei die Mittel zum Zuführen eines Oxidationsmittelstroms und die Mittel zum Zuführen des Nebels aus Katholytlösungströpfchen dazu konfiguriert sind, ein durchschnittliches Verhältnis des Oxidationsmittels zu den flüssigen Katholytlösungströpfchen von 10:1 bis 50:1 bereitzustellen; und
- Abscheidungsmittel zum Abscheiden des Nebels aus Katholytlösungströpfchen aus dem Oxidationsmittelstrom.

6. Regenerierungszone nach Anspruch 5, umfassend mehrere Tröpfchenbildungsmittel für die Katholytlösungszerstäubung.

7. Regenerierungszone nach einem der Ansprüche 5 oder 6, die wirksam ist, um ein Oxidationsmittel zuzuführen, das Luft umfasst, und/oder wirksam ist, um ein Oxidationsmittel zuzuführen, das Sauerstoff umfasst.

8. Regenerierungszone nach einem der Ansprüche 5 bis 7, die für eine Katholytlösung angepasst ist, die einen Katalysator, wie etwa ein Polyoxometallat (POM), umfasst.

9. Verfahren nach einem der Ansprüche 1 bis 4 oder Regenerierungszone nach einem der Ansprüche 5 bis 8, wobei die Tröpfchenbildungsmittel Sprühdüsen, drehende Scheiben, akustisch betriebene Oszillatoren und mikrofluidisch betriebene Oszillatoren umfassen.

10. Verfahren nach einem der Ansprüche 1 bis 4 oder 9 oder Regenerierungszone nach einem der Ansprüche 5 bis 9, wobei der Oxidationsmittelstrom die Katholytlösungströpfchen lenkt und/oder wobei der Oxidationsmittelstrom die Katholytlösungströpfchen davon abhält, auf das Reaktionsgefäß der Redox-Brennstoffzelle aufzutreffen, sodass die Flugzeit der Tröpfchen ausreicht, um den erforderlichen Stoffaustausch zu vollziehen.

11. Verfahren nach einem der Ansprüche 1 bis 4, 9 oder 10 oder Regenerierungszone nach einem der Ansprüche 5 bis 10, wobei das durchschnittliche Verhältnis des Oxidationsmittels zu den flüssigen Katholytlösungströpfchen 20:1 bis 30:1 beträgt, und/oder wobei der Abstand zwischen den Katholytlösungströpfchen ungefähr 1,5-mal den durchschnittlichen Durchmesser der Katholytlösungströpfchen beträgt.

12. Verfahren nach einem der Ansprüche 1 bis 4 oder 9 bis 11 oder Regenerierungszone nach einem der Ansprüche 5 bis 11, wobei die durchschnittliche Tröpfchendurchmessergröße im Bereich von 1 bis 100 mm liegt, wobei optional die durchschnittliche Tröpfchendurchmessergröße im Bereich von 1 bis 5 mm liegt.

13. Verfahren nach einem der Ansprüche 1 bis 4 oder 9 bis 12 oder Regenerierungszone nach einem der Ansprüche 5 bis 12, wobei die Abscheidungsmittel einen Zyklonabscheider umfassen, und/oder wobei die Abscheidungsmittel einen Spiralzyklonabscheider umfassen.

14. Redox-Brennstoffzelle, die Folgendes umfasst:
- eine Anode und eine Kathode, die durch eine ionenselektive Polymerelektrolytmembran getrennt sind;
- Mittel zum Zuführen eines Brennstoffs zu der Anodenregion der Zelle;
- Mittel zum Zuführen eines Oxidationsmittels zu der Kathodenregion der Zelle;
- Mittel zum Bereitstellen eines elektrischen Stromkreises zwischen jeweiligen Anoden und Kathoden der Zelle;
- eine Katholytlösung, die mindestens eine Katholytkomponente umfasst; und
- eine Regenerierungszone nach Anspruch 5, wobei optional die Katholytlösung ein Redoxvermittlerpaar umfasst.

15. Verwendung der Regenerierungszone nach einem der Ansprüche 5 bis 13 in einer Redox-Brennstoffzelle zum Regenerieren einer Katholytlösung.

## Revendications

1. Procédé de régénération d'une solution de catholyte dans une cellule à combustible d'oxydoréduction, comprenant les étapes consistant à :
- fournir une cellule à combustible de d'oxydoréduction comprenant une
solution de catholyte ;
- fournir un moyen de formation de gouttelettes pour l'atomisation de la solution de catholyte ;
- atomiser la solution de catholyte, par voie d'un moyen de formation de gouttelettes ou d'un autre moyen, en générant ainsi un brouillard de gouttelettes de solution de catholyte ;
- alimenter le brouillard de gouttelettes de solution de catholyte dans un courant d'oxydant, dans lequel un rapport moyen de l'oxydant aux gouttelettes de solution de catholyte liquide est compris dans l'intervalle allant de 10/1 à 50/1 ; et
- fournir un moyen de séparation pour séparer le brouillard de gouttelettes de solution de catholyte du courant d'oxydant.

2. Procédé selon la revendication 1, comprenant l'étape de fourniture d'un moyen de formation de gouttelettes multiples pour l'atomisation de la solution de catholyte.

3. Procédé selon l'une quelconque des revendications 1 à 2, dans lequel l'oxydant comprend de l'air et/ou dans lequel l'oxydant comprend de l'oxygène.

4. Procédé selon l'une quelconque des revendications 1 à 3, dans lequel la solution de catholyte comprend un catalyseur, tel que le polyoxométallate (POM).

5. Zone de régénération pour une cellule à combustible d'oxydoréduction, comprenant :
- un moyen de formation de gouttelettes pour l'atomisation de la solution de catholyte utilisable pour générer un brouillard de gouttelettes de solution de catholyte ;
- un moyen de fourniture d'un courant d'oxydant à la région de la cathode de la cellule ;
- un moyen d'alimentation du brouillard de gouttelettes de solution de catholyte dans le courant d'oxydant, dans lequel le moyen de fourniture d'un courant d'oxydant et le moyen d'alimentation du brouillard de gouttelettes de solution de catholyte sont configurés pour procurer un rapport moyen de l'oxydant à la solution de catholyte liquide compris dans l'intervalle allant de 10/1 à 50/1, et
- un moyen de séparation du brouillard de gouttelettes de solution de catholyte du courant d'oxydant.

6. Zone de régénération selon la revendication 5, comprenant plusieurs moyens de formation de gouttelettes pour l'atomisation de la solution de catholyte.

7. Zone de régénération selon l'une quelconque des revendications 5 ou 6, utilisable pour fournir un oxydant qui comprend de l'air et/ou est utilisable pour fournir un oxydant qui comprend de l'oxygène.

8. Zone de régénération selon l'une quelconque des revendications 5 à 7, conçu pour une solution de catholyte qui comprend un catalyseur, tel qu'un polyoxométallate (POM).

9. Procédé selon l'une quelconque des revendications 1 à 4 ou zone de régénération selon l'une quelconque des revendications 5 à 8, dans lequel le moyen de formation de gouttelettes comprend des buses de pulvérisation, des disques rotatifs, des oscillateurs acoustiquement assistés et des oscillateurs microfluidiquement assistés.

10. Procédé selon l'une quelconque des revendications 1 à 4 ou 9, ou zone de régénération selon l'une quelconque des revendications 5 à 9, dans lequel l'écoulement du courant d'oxydant dirige les gouttelettes de solution de catholyte et/ou dans lequel l'écoulement du courant d'oxydant prévient les gouttelettes de solution de catholyte d'affecter la cuve de réaction de la cellule à combustible d'oxydoréduction de sorte que le temps de vol des gouttelettes est suffisant pour accomplir le transfert de masse requis.

11. Procédé selon l'une quelconque des revendications 1 à 4, 9 ou 10, ou zone de régénération selon l'une quelconque des revendications 5 à 10, dans lequel le rapport moyen de l'oxydant aux gouttelettes de solution de catholyte liquide est compris dans l'intervalle de 20/1 à 30/1 et/ou dans lequel l'espacement entre les gouttelettes de solution de catholyte est d'environ 1,5 fois le diamètre moyen des gouttelettes de solution de catholyte.

12. Procédé selon l'une quelconque des revendications 1 à 4 ou 9 à 11, ou zone de régénération selon l'une quelconque des revendications 5 à 11, dans lequel le diamètre moyen des gouttelettes est compris dans l'intervalle allant de 1 à 100 mm, éventuellement dans lequel le diamètre moyen des gouttelettes est compris dans l'intervalle allant de 1 à 5 mm.

13. Procédé selon l'une quelconque des revendications 1 à 4 ou 9 à 12, ou zone de régénération selon l'une quelconque des revendications 5 à 12, dans lequel le moyen de séparation comprend un séparateur cyclonique, et/ou dans lequel le moyen de séparation comprend un séparateur cyclonique à spirale.

14. Cellule à combustible d'oxydoréduction comprenant :
une anode et une cathode séparées par une membrane électrolytique polymère sélective d'ions ;
un moyen d'alimentation d'un combustible à la région d'anode de la cellule ;
un moyen d'alimentation d'un oxydant à la région de cathode de la cellule ;
un moyen de fourniture d'un circuit électrique entre les anodes et les cathodes respectives de la cellule ;
une solution de catholyte comprenant au moins un composant catholytique ; et
une zone de régénération selon la revendication 5, éventuellement dans laquelle la solution de catholyte comprend un couple médiateur d'oxydoréduction.

15. Utilisation de la zone de régénération selon l'une quelconque des revendications 5 à 13 dans une cellule à combustible d'oxydoréduction pour la régénération d'une solution de catholyte.
